# FASCICULE DE BREVET EUROPEEN

(11) **EP 3 002 538 B1**
(45) Date de publication et mention de la délivrance du brevet: **27.05.2020**
(21) Numéro de dépôt: 15187570.5
(22) Date de dépôt: 30.09.2015
(51) Int. Cl.: F28D 1/053, B60H 1/00, F28D 20/02, F28F 1/12, F28D 1/03

(54) **ECHANGEUR DE CHALEUR, NOTAMMENT POUR VÉHICULE AUTOMOBILE**
WÄRMETAUSCHER, INSBESONDERE FÜR KRAFTFAHRZEUG
HEAT EXCHANGER, IN PARTICULAR FOR A MOTOR VEHICLE

(30) Priorité: 30.09.2014 FR 1459298
(43) Date de publication de la demande: 06.04.2016
(73) Titulaire: VALEO SYSTEMES THERMIQUES, 78320 Le Mesnil Saint-Denis (FR)
(72) Inventeur: BELLENFANT, Aurélie, 72210 ROEZE-SUR-SARTHE (FR); ROBILLON, Lionel, 72230 MULSANNE (FR); TISSOT, Julien, 92800 PUTEAUX (FR); AZZOUZ, Kamel, 75012 PARIS (FR)
(74) Mandataire: Tran, Chi-Hai

(56) Documents cités:
- DE-A1-102004 055 340
- FR-A1- 2 997 482
- US-A1- 2012 204 597
- US-A1- 2013 284 395

## Description

L'invention se rapporte aux échangeurs de chaleur, plus particulièrement aux échangeurs destinés à des circuits de climatisation pour véhicule automobile. Il pourra s'agir par exemple, Le document US 2012/0204597 décrit un échangeur selon le préambule de la revendication 1.

Un évaporateur est configuré pour permettre un échange d'énergie thermique entre un fluide réfrigérant circulant à l'intérieur d'un circuit de climatisation et un flux d'air ambiant qui le traverse. Le flux d'air est refroidi par le changement de phase du fluide réfrigérant se produisant au sein de l'évaporateur. Le fonctionnement du circuit de climatisation est assuré par un compresseur, lui-même entraîné par la courroie de distribution d'un moteur. Lorsque le moteur s'arrête, le compresseur s'arrête également et le circuit de climatisation ne peut plus fonctionner, bloquant ainsi l'échange d'énergie thermique et donc le refroidissement du flux d'air par l'évaporateur.

Ce phénomène est particulièrement gênant dans les véhicules dont le moteur est configuré pour s'arrêter quand le véhicule est stoppé, par exemple à un croisement où lors de ralentissements de la circulation. Les occupants de ces véhicules subissent alors une augmentation de la température due à l'arrêt de la climatisation et peuvent également subir des odeurs désagréables dues au passage d'air chaud sur des parois humides à l'intérieur du circuit.

Pour palier ces inconvénients, il est connu d'utiliser des matériaux à changement de phase que l'on place à l'intérieur de l'évaporateur et qui permettent de prolonger le fonctionnement de la climatisation après l'arrêt du moteur, en absorbant puis en libérant de l'énergie thermique.

Pour contenir ces matériaux à changement de phase, notamment lorsqu'ils sont en phase liquide, il a été proposé des plaques empilées par exemple dans la demande de brevet JP2013-173393A. Ces solutions ont néanmoins pour inconvénient d'augmenter le nombre de pièces à utiliser. Ils présentent en outre l'inconvénient d'agir en tant que barrière thermique en limitant les échanges thermiques avec le matériau à changement de phase.

La présente invention a pour but de pallier les inconvénients précités. Pour ce faire, l'invention divulgue un échangeur de chaleur, notamment pour véhicule automobile, comprenant les caractéristiques de la revendication 1.

Par matrice, on entend un substrat ouvert et/ou poreux accueillant ledit matériau à changement de phase et le retenant en phase liquide en raison de sa viscosité et de phénomènes de tension de surface ou autres. Ainsi, il n'est pas nécessaire de recourir à des réceptacles tels que des plaques empilées pour contenir les matériaux à changement de phase dans les dispositifs d'échange de chaleur. On favorise également les échanges thermiques par un contact direct avec le matériau à changement de phase.
Selon différents modes de réalisation de l'invention, qui pourront être pris ensemble ou séparément :
- ledit matériau à changement de phase est apte à changer de phase à une température de fusion/solidification constante,
- ledit élément de stockage thermique se présente sous la forme d'un bloc,
- ledit bloc présente une profondeur sensiblement identique à une profondeur du faisceau,
- ledit faisceau présente un pas de tubes constant,
- ledit échangeur comprend en outre une pièce intermédiaire située entre ledit élément de stockage thermique et ledit faisceau, en particulier l'un desdits tubes et/ou l'intercalaire spécifique, ladite pièce intermédiaire étant conçue pour faciliter l'échange d'énergie thermique avec ledit élément de stockage thermique,
- ladite pièce intermédiaire comprend au moins une plaque thermiquement conductrice,
- ledit élément de stockage thermique est mis en forme par injection,
- ledit élément de stockage thermique est mis en forme par laminage.

L'invention sera mieux comprise au cours de la description explicative détaillée qui va suivre, d'au moins un mode de réalisation de l'invention donné à titre d'exemple purement illustratif et non limitatif, en référence aux dessins schématiques annexés.
- La figure 1 illustre schématiquement une vue en perspective d'un échangeur de chaleur selon l'invention.
- La figure 2 illustre schématiquement une vue en perspective d'une partie d'un échangeur de chaleur selon l'invention.
- La figure 3 illustre schématiquement et de façon éclatée une vue en perspective d'une partie d'un élément de stockage thermique et d'un intercalaire d'un échangeur selon l'invention.
- La figure 4 est similaire à la figure 3 et illustre un autre mode de réalisation, conforme à l'invention.

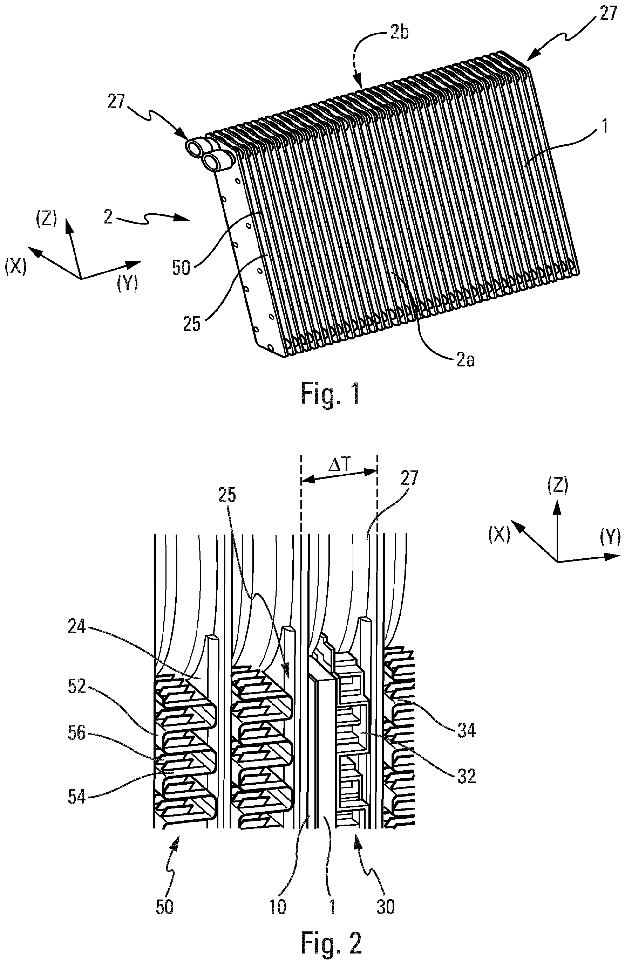

Comme illustré à la figure 1, l'invention concerne un échangeur de chaleur 2, plus particulièrement pour une installation de climatisation pour véhicule, notamment un véhicule automobile.

Ladite installation de climatisation pourra comprendre un circuit réfrigérant conçu pour réguler la température d'un fluide environnant. Ici, ledit fluide environnant est un flux d'air, par exemple un flux d'air ambiant. Le circuit réfrigérant comprend par exemple un compresseur, un condenseur, un détendeur et l'échangeur de chaleur 2, conforme à l'invention, fonctionnant comme un évaporateur, reliés l'un à l'autre et à l'intérieur desquels circule un fluide réfrigérant.

Comme illustré aux figures 1 et 2, ledit échangeur de chaleur 2 comprend un faisceau permettant un échange d'énergie thermique entre ledit fluide réfrigérant et ledit flux d'air ambiant. Ledit faisceau d'échange de chaleur comprend ici des tubes 25 à l'intérieur desquels circule ledit fluide réfrigérant. Dans le cas d'une application de l'invention à un évaporateur, c'est la transformation dudit fluide réfrigérant d'un état liquide à un état gazeux qui permet ledit échange d'énergie thermique.

Ledit échangeur de chaleur 2 présente avantageusement une face avant 2a et une face arrière 2b, les deux faces avant 2a et arrière 2b se suivant l'une derrière l'autre suivant une direction correspondant sensiblement à la direction d'écoulement dudit flux d'air ambiant au niveau de chacune desdites faces. Ainsi, lesdites faces avant 2a et arrière 2b sont agencées de sorte que le flux d'air ambiant, lorsqu'il traverse ledit échangeur 2, entre par la face avant 2a, passe entre lesdits tubes 25 du faisceau et ressort par la face arrière 2b, ceci sensiblement selon la direction (X) du repère illustré à la figure 1. Ici, ledit échangeur 2 présente une forme sensiblement parallélépipédique et lesdites faces avant 2a et arrière 2b sont sensiblement parallèles entre elles. Elles sont séparées par une dimension représentant une profondeur du faisceau, selon l'axe X. Elles présentent une hauteur, selon l'axe Y, et une largeur, selon l'axe 2, sensiblement identiques.

Lesdits tubes 25 dudit faisceau sont réalisés, par exemple, par assemblage en paire de plaques 24, le fluide réfrigérant circulant entre les deux plaques 24 d'une même paire de plaques 24. Lesdits tubes 25 sont avantageusement espacés et agencés parallèlement les uns par rapport aux autres, de sorte que ledit flux d'air circule entre les plaques 24 de deux paires voisines de plaques 24. Les plaques 24 sont empilées les unes parallèlement aux autres selon une direction d'empilement correspondant à ladite direction Y.

Avantageusement, ledit faisceau présente un pas Δ_{T} de tubes 25 constant, ledit pas Δ_{T} étant défini comme la distance suivant la direction Y séparant deux tubes voisins.

Ledit faisceau de tubes 25 comprend avantageusement des boîtes collectrices 27, l'une d'entrée, l'autre de sortie, pour le fluide réfrigérant. Elles communiquent avec les tubes 25. Elles sont ici réalisées par un empilage de bossages, prévues à une extrémité longitudinale des tubes 25. Lesdits bossages de chacune desdites boîtes collectrices 27 sont empilés les uns par rapport aux autres en formant une rangée, ladite rangée s'étendant suivant la direction Y. Les deux boîtes collectrices 27 sont avantageusement parallèles l'une à l'autre.

Par la suite, on désignera par zones inter-tubes les zones situées entre deux tubes voisins. Plus précisément, ici chaque zone inter-tubes s'étend à l'intérieur dudit échangeur entre les plaques 24 de deux paires voisines de plaques 24 et entre lesdites faces avant et arrière dudit échangeur 2. Lesdites zones inter-tubes sont aptes à être traversées par ledit flux d'air ambiant.

Avantageusement, ledit faisceau de tubes 25 pourra comprendre des intercalaires, dits intercalaires standards 50, en contact avec lesdits tubes 25 et situés dans les zones inter-tubes, sur une partie du faisceau. Lesdits intercalaires standards 50 sont configurés pour augmenter la surface d'échange thermique entre ledit flux d'air et ledit échangeur 2 et pour dévier ledit flux d'air ambiant lors de sa traversée de l'échangeur 2.

Ledit intercalaire standard 50 présente avantageusement un bord avant, confondu avec ladite face avant 2a dudit échangeur 2 et un bord arrière confondu avec ladite face arrière 2b dudit échangeur 2. Ledit intercalaire standard 50 présente en outre des sommets 52 parallèles l'un à l'autre et s'étendant selon la direction X, de sorte que chaque sommet 52 dudit intercalaire standard 50 est en contact avec l'une des deux plaques 24 de deux tubes 25 voisins, les deux tubes 25 voisins délimitant une même zone inter-tube.

Lesdits intercalaires standards 50 sont par exemple des plaques ondulées. Ici, chacun desdits intercalaires 50 présente des plis 54, de forme plane, s'étendant entre deux sommets 52 adjacents dudit intercalaire standard 50. Chaque sommet 52 présente avantageusement une partie centrale plane formant un angle avec lesdits plis 54.

Lesdits plis 54 desdits intercalaires standards 50 pourront être équipés de persiennes 56, chaque persienne 56 comprenant un bord relevé définissant une fente de passage de l'air. Lesdites fentes des persiennes 56 sont droites, étroites et parallèles les unes aux autres et présentent une direction d'extension longitudinale selon la direction Y. Elles servent à dévier le flux d'air.

Avantageusement, lesdits intercalaires 50 et lesdits tubes 25 sont agencés de sorte qu'il existe entre eux une continuité thermique. De plus, lesdits intercalaires 50 sont sensiblement de mêmes dimensions, selon les directions X et Z, que lesdites plaques 24 de l'échangeur 2, de manière à assurer une bonne capacité de l'échangeur tout en favorisant l'échange d'énergie thermique entre lesdits tubes 25 et le flux d'air ambiant.

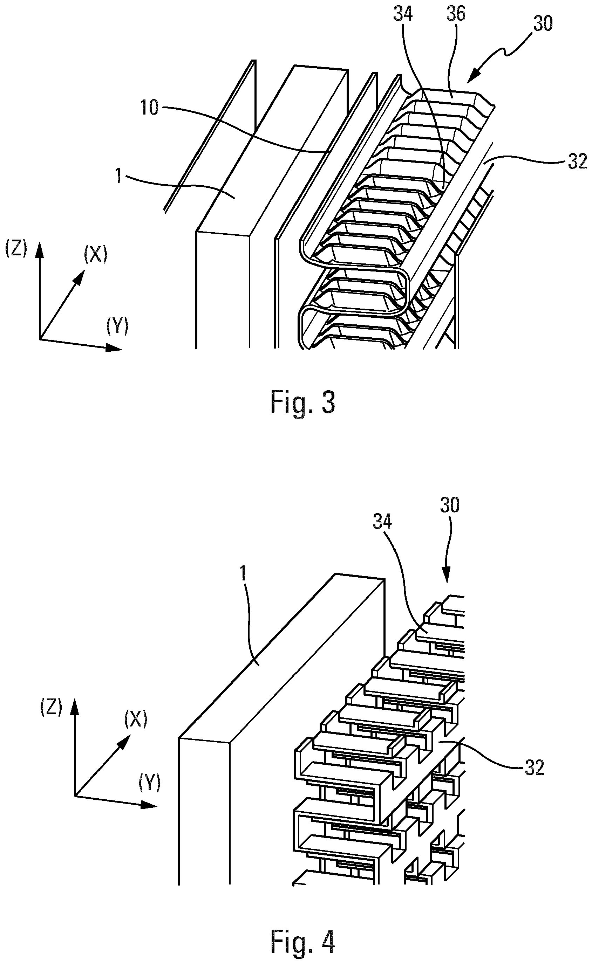

Comme illustré en particulier aux figures 3 et 4, ledit échangeur de chaleur 2 comprend en outre au moins un élément de stockage thermique 1, éventuellement associé à un intercalaire 30, dit intercalaire spécifique, ledit élément de stockage thermique 1 et ledit intercalaire spécifique 30 étant situés dans l'une desdites zones inter-tubes. Autrement dit, ils sont situés entre deux desdits tubes 25 voisins, ladite zone inter-tube étant alors dépourvue d'intercalaire standard 50.

Ledit élément de stockage thermique 1 se présente avantageusement sous la forme d'un bloc, de manière à faciliter son insertion dans l'une desdites zones inter-tubes. Ledit élément de stockage thermique 1 est configuré pour permettre un échange d'énergie thermique avec ledit flux d'air ambiant et/ou avec ledit fluide réfrigérant.

Ledit élément de stockage thermique 1 est composé d'un matériau à changement de phase et d'une matrice. Ledit matériau à changement de phase est par exemple un eutectique, c'est-à-dire composé d'au moins deux corps purs, dont l'un au moins fait par exemple partie de la famille des paraffines, ledit matériau à changement de phase étant apte à changer de phase à une température de fusion / solidification constante. D'autre part, ledit matériau à changement de phase est conçu pour être sous une forme liquide et/ou une forme solide, selon la température dudit flux d'air ambiant.

Ladite matrice est, par exemple, un élément maillé, ledit élément à changement de phase étant focalisé dans des mailles de ladite matrice. La matrice est configurée pour permettre au matériau à changement de phase de capter de l'énergie thermique depuis ledit flux d'air ambiant et/ou à libérer ladite énergie thermique vers ledit flux d'air. Ladite matrice permet en outre de donner sa forme à l'élément de stockage thermique 1 et permet de maintenir la forme dudit élément de stockage thermique 1 lors du changement de phase du matériau à changement de phase, en particulier lorsque ledit matériau à changement de phase est dans une phase liquide. Ladite matrice permet donc d'éviter d'avoir à encapsuler ledit matériau à changement de phase, par exemple dans un tube, en particulier quand ledit matériau à changement de phase est dans une phase liquide. De la sorte, ladite matrice permet de minimiser le volume nécessaire à l'insertion dudit élément de stockage thermique 1 au sein du faisceau de tubes 25. Ledit élément de stockage thermique 1 est par exemple mis en forme par injection et / ou par laminage.

La matrice peut être réalisée à partir d'un matériau comprenant un polymère et des fibres de carbone permettant à l'élément de stockage thermique 1 d'être suffisamment rigide indépendamment des phases solide ou liquide du matériau à changement de phase.

Avantageusement, ledit échangeur de chaleur 2 comprend en outre au moins une pièce intermédiaire 10, ici deux. Lesdites pièces intermédiaires 10 ont par exemple une forme de plaque plane et sont situées entre ledit élément de stockage 1 et l'un desdits tubes 25 et entre ledit élément de stockage 1 et ledit intercalaire spécifique 30. De la sorte, lesdites pièces intermédiaires 10, ledit élément de stockage 1, et ledit intercalaire spécifique 30 sont situés dans la même zone inter-tube. La pièce intermédiaire 10 est conçue pour faciliter l'échange thermique avec ledit élément de stockage thermique 1. Dans l'exemple de réalisation décrit, les deux pièces intermédiaires 10 sont agencées parallèlement l'une à l'autre et de manière perpendiculaire à la direction Y.

Avantageusement, les deux pièces intermédiaires 10 présentent selon les directions X et Z sensiblement les mêmes dimensions que les intercalaires standards 50 et que ledit élément de stockage thermique 1. Lesdites pièces intermédiaires 10 sont en revanche beaucoup plus étroites selon la direction Y que lesdits éléments de stockage 1, de sorte qu'elle présente une très faible épaisseur par rapport audit élément de stockage thermique 1. Lesdites pièces intermédiaires 10 sont avantageusement conçues en graphite ou dans tout autre matériau à fort pouvoir conductif.

Ledit intercalaire spécifique 30, comme le ou les intercalaires standards 50 sont destinés à être traversé par ledit flux d'air. Ledit intercalaire spécifique 30 est situé entre ledit élément de stockage thermique 1 et l'un des dits tubes 25, l'une desdites pièces intermédiaires 10 étant éventuellement intercalée entre ledit intercalaire spécifique 30 et ledit élément de stockage thermique 1. Ledit intercalaire spécifique 30 présente ici un bord avant, situé au même niveau que ladite face avant dudit échangeur 2 et un bord arrière situé au même niveau que ladite face arrière dudit échangeur 2. Ledit intercalaire spécifique 30 présente en outre des sommets parallèles l'un à l'autre et s'étendant selon la direction X, de sorte que chaque sommet dudit intercalaire spécifique 30 est en contact soit avec l'un desdits tubes 25, soit avec ledit élément de stockage thermique 1 ou l'une desdites pièces intermédiaires 10, selon que ledit échangeur 2 est muni ou non de telles pièces intermédiaires 10.

Compte-tenu du pas de tubes constant, ledit intercalaire spécifique 30 est de hauteur plus faible selon l'axe Y. Ainsi, la faible dimension dudit intercalaire spécifique 30 selon la direction Y permet l'insertion dans une même zone inter-tube de l'un desdits éléments de stockage thermique 1 et de l'un desdits intercalaires spécifiques 30.

Dans un premier mode de réalisation, illustré à la figure 3, ledit intercalaire spécifique est de forme, ondulée, identique à celles des intercalaires standards. Dans un autre mode de réalisation illustré aux figures 2 et 4, l'intercalaire spécifique est un intercalaire 30 de type offset. L'intercalaire 30 de type offset est composé d'une multitude de bandes longitudinales solidaires les unes des autres. Lesdites bandes sont pliées en créneau de sorte que chaque bande présente des plis 34 de forme plane, lesdits plis 34 étant adjacents entre eux et parallèles les uns aux autres. Chaque pli 34 présente alors une forme de lamelle s'étendant selon une direction d'extension longitudinale parallèle à la direction Y. Lesdits plis 34 sont ainsi situés les uns derrière les autres, formant une succession de plis 34, ladite succession de plis 34 s'étendant longitudinalement suivant la direction Z. Chaque pli 34 est en outre séparé d'un pli 34 voisin par une distance d selon la direction Z, de sorte que dans chaque bande chaque pli 34 est relié à un pli 34 voisin par un sommet de pli 32, ledit sommet de pli 32 ayant lui aussi une forme plane. Ledit sommet de pli 32 présente par ailleurs un angle droit avec chacun des deux plis 34 adjacents qu'il relie entre eux. Lesdits sommets de pli 32 d'une même bande sont alternativement situés sur l'une puis l'autre des deux faces latérales dudit intercalaire spécifique 30.

Lesdits sommets de plis 32 dudit intercalaire spécifique 30 sont ainsi configurés pour être en contact, suivant qu'ils soient situées sur l'une ou l'autre des deux faces latérales dudit intercalaire spécifique 30, soit avec une plaque 24 de l'un desdits tubes 25 soit avec ledit élément de stockage thermique 1 et/ou l'une desdites pièces intermédiaires 10.

Les bandes composant ledit intercalaire offset 30 sont d'autre part empilées les unes à côté des autres, formant une succession de bandes adjacentes les unes aux autres, ladite succession de bandes s'étendant selon la direction X, c'est-à-dire entre la face avant et la face arrière dudit échangeur 2. Dans ladite succession de bandes, chaque bande présente un pliage identique mais décalé dans sa mise en forme par rapport à ses deux bandes adjacentes d'une distance égale à d/2 suivant la direction Z. Autrement dit chaque sommet de pli 32 d'une des dites bandes est décalé d'une distance d/2 par rapport aux deux sommets de pli 32 les plus proches appartenant chacun à une bande adjacente. Avantageusement, deux bandes voisines sont en contact et solidaires l'une avec l'autre.

En se reportant de nouveau à la figure 1, on comprend que l'on peut ainsi distinguer, dans ledit échangeur 2, deux types de zones inter-tubes. Un premier type de zone inter-tube est dépourvue d'intercalaire standard 50 qui est remplacé par un intercalaire spécifique 30 et un élément de stockage thermique 1, ledit élément de stockage thermique 1 étant avantageusement agencé entre deux pièces intermédiaires 10, de sorte que lesdites pièces intermédiaires 10 sont situées de part et d'autre dudit élément de stockage thermique 1 selon la direction Y. Concernant le reste des zones inter-tubes, celles-ci étant dépourvues d'élément de stockage thermique, elles sont munies d'intercalaires standards 50.

A la figure 1, on constate que plusieurs zones inter-tubes sont munies d'un élément de stockage thermique 1. Il s'agit ici de plusieurs zones successives mais lesdites zones pourront, en variante, être régulièrement réparties au sein de l'échangeur.

## Revendications

1. Echangeur de chaleur (2), notamment pour véhicule automobile, comprenant un faisceau d'échange de chaleur entre un fluide réfrigérant et un flux d'air, ledit échangeur (2) comprenant en outre un élément de stockage thermique (1) composé d'un matériau à changement de phase et d'une matrice, ledit élément de stockage (1) étant intégré dans ledit faisceau de façon à ce que ledit matériau à changement de phase capte une énergie thermique venant dudit fluide réfrigérant et/ou la libère vers ledit flux d'air, ladite matrice permettant de maintenir ledit matériau à changement de phase au sein du faisceau lors d'un changement de phase dudit matériau à changement de phase, dans lequel ledit faisceau comprend des tubes (25) de circulation du fluide réfrigérant, ledit élément stockage thermique (1) étant installé entre deux desdits tubes (25) voisins, dits premiers tubes, dans lequel ledit faisceau comprend en outre un intercalaire (30), dit spécifique, destiné à être traversé par ledit flux d'air, ledit intercalaire spécifique (30) étant situé entre ledit élément de stockage thermique (1) et l'un desdits premiers tubes, **caractérisé en ce que** ledit échangeur (2) comprend en outre une pièce intermédiaire (10) située entre ledit élément de stockage thermique (1) et ledit faisceau, en particulier l'un desdits tubes (25) et/ou l'intercalaire spécifique (30), ladite pièce intermédiaire (10) étant conçue pour faciliter l'échange d'énergie thermique avec ledit élément de stockage thermique (1) et **en ce que** ledit matériau à changement de phase est un eutectique.

2. Echangeur (2) selon la revendication précédente, dans lequel ledit matériau à changement de phase est apte à changer de phase à une température de fusion/solidification constante.

3. Echangeur (2) selon l'une quelconque des revendications précédentes, dans lequel ledit élément de stockage thermique (1) se présente sous la forme d'un bloc.

4. Echangeur (2) selon la revendication précédente, dans lequel ledit faisceau présente un pas de tubes (25) constant.

5. Echangeur (2) selon l'une quelconque des revendications 3 ou 4 dans lequel ledit intercalaire spécifique (30) présente une hauteur inférieure à la hauteur d'un intercalaire (50), dit standard, situé entre deux desdits tubes (25), l'un au moins desdits tubes (25) entre lesquels ledit intercalaire standard (50) est situé étant distinct desdits premiers tubes.

6. Echangeur (2) selon la revendication précédente, dans lequel ladite pièce intermédiaire (10) comprend au moins une plaque thermiquement conductrice.

## Patentansprüche

1. Wärmetauscher (2), insbesondere für ein Kraftfahrzeug, umfassend ein Wärmeaustauschbündel zum Wärmeaustausch zwischen einem Kältemittel und einem Luftstrom, wobei der Tauscher (2) ferner ein thermisches Speicherelement (1) umfasst, das aus einem Phasenwechselmaterial und aus einer Matrix besteht, wobei das Speicherelement (1) in das Bündel so integriert ist, dass das Phasenwechselmaterial eine vom Kältemittel kommende thermische Energie aufnimmt und/oder sie an den Luftstrom abgibt, wobei die Matrix es ermöglicht, das Phasenwechselmaterial bei einem Phasenwechsel des Phasenwechselmaterials zu halten, wobei das Bündel Zirkulationsrohre (25) für das Kältemittel umfasst, wobei das thermische Speicherelement (1) zwischen zwei benachbarten Rohren (25), erste Rohre genannt, eingebaut ist, wobei das Bündel ferner eine sogenannte spezifische Einlage (30) umfasst, die dazu bestimmt ist, von dem Luftstrom durchströmt zu werden, wobei die spezifische Einlage (30) zwischen dem thermischen Speicherelement (1) und einem der ersten Rohre gelegen ist, **dadurch gekennzeichnet, dass** der Tauscher (2) ferner ein Zwischenstück (10) umfasst, das zwischen dem thermischen Speicherelement (1) und dem Bündel, insbesondere einem der Rohre (25) und/oder der spezifischen Einlage (30), gelegen ist, wobei das Zwischenstück (10) dazu bestimmt ist, den Austausch thermischer Energie mit dem thermischen Speicherelement (1) zu erleichtern, und dadurch, dass das Phasenwechselmaterial ein Eutektikum ist.

2. Tauscher (2) nach dem vorhergehenden Anspruch, bei dem das Phasenwechselmaterial geeignet ist, die Phase bei einer konstanten Schmelz-/Erstarrungstemperatur zu wechseln.

3. Tauscher (2) nach einem der vorhergehenden Ansprüche, bei dem das thermische Speicherelement (1) in Form eines Blocks vorliegt.

4. Tauscher (2) nach dem vorhergehenden Anspruch, bei dem das Bündel einen konstanten Abstand der Rohre (25) aufweist.

5. Tauscher (2) nach einem der Ansprüche 3 oder 4, bei dem die spezifische Einlage (30) eine Höhe aufweist, die geringer als die Höhe einer sogenannten Standardeinlage (50) ist, die zwischen zweien der Rohre (25) gelegen ist, wobei mindestens eines der Rohre (25), zwischen denen die Standardeinlage (50) gelegen ist, verschieden von den ersten Rohren ist.

6. Tauscher (2) nach dem vorhergehenden Anspruch, bei dem das Zwischenstück (10) mindestens eine thermisch leitende Platte umfasst.

## Claims

1. Heat exchanger (2), in particular for a motor vehicle, comprising a core for heat exchange between a coolant fluid and an air flow, said exchanger (2) further comprising a thermal storage element (1) composed of a phase-change material and a matrix, said storage element (1) being integrated into said core in such a manner that said phase-change material captures thermal energy originating from said coolant fluid and/or releases same towards said air flow, said matrix making it possible to maintain said phase-change material within the core during a change of phase of said phase-change material, wherein said core comprises coolant fluid circulation tubes (25), said thermal storage element (1) being installed between two of said adjacent tubes (25), referred to as first tubes, wherein said core further comprises a fin (30), referred to as specific fin, designed to be traversed by said air flow, said specific fin (30) being located between said thermal storage element (1) and one of said first tubes, **characterized in that** said exchanger (2) further comprises an intermediate component (10) located between said thermal storage element (1) and said core, in particular one of said tubes (25) and/or the specific fin (30), said intermediate component (10) being designed so as to facilitate the exchange of thermal energy with said thermal storage element (1), and **in that** said phase-change material is a eutectic material.

2. Exchanger (2) according to the preceding claim, wherein said phase-change material is capable of changing phase at a constant melting/solidifying temperature.

3. Exchanger (2) according to either of the preceding claims, wherein said thermal storage element (1) is in the form of a block.

4. Exchanger (2) according to the preceding claim, wherein said core has a constant pitch of tubes (25) .

5. Exchanger (2) according to either of Claims 3 and 4, wherein said specific fin (30) has a height less than the height of a fin (50), referred to as standard fin, located between two of said tubes (25), one at least of said tubes (25) between which said standard fin (50) is located being distinct from said first tubes.

6. Exchanger (2) according to the preceding claim, wherein said intermediate component (10) comprises at least one thermally conducting plate.
